# EUROPÄISCHE PATENTANMELDUNG

(11) **EP 4 231 547 A1**
(43) Veröffentlichungstag der Anmeldung: **23.08.2023**
(21) Anmeldenummer: 22157122.7
(22) Anmeldetag: 16.02.2022
(51) Int. Cl.: H04B 10/114, H04B 10/116

(54) **VERFAHREN UND SYSTEM ZUR DATENÜBERTRAGUNG**

(71) Anmelder: Siemens Aktiengesellschaft, 80333 München (DE)
(72) Erfinder: KRAMMER, Lukas, 1220 Wien (AT); LECHNER, Daniel, 2170 Poysdorf (AT); HOFMANN, Andreas, 1140 Wien (AT); RESEL, Leopold, 1030 Wien (AT); KNORR, Felix, 1060 Wien (AT)
(74) Vertreter: Siemens Patent Attorneys

(57) **Zusammenfassung**

Verfahren zur Datenübertragung in einem System (S), umfassend einen Sender (TX) mit einer Modulationsvorrichtung (MOD) und einem Lichtemitter, sowie und einen Empfänger (RX) mit einer Kamera, in welcher die Bilderfassung zeitlich sequenziell in Form von Bildzeilen oder Bildspalten erfolgt, und einer Rechenvorrichtung (CPU) mit einem Speicher, wobei folgende Schritte ausgeführt werden:
a) Bereitstellen zumindest einer Dateninformation,
b) Modulieren eines Trägersignals mithilfe der zumindest einen Dateninformation zu einem modulierten Signal,
c) Senden des modulierten Signals,
d) Empfangen des Lichtsignals (LS) durch die Kamera, welche ein Bild (B) zeitlich sequenziell in Form von Bildzeilen (Z1-Z8) oder Bildspalten (S1-S8) erfasst,
e) Ermitteln einer ersten Bildinformation (BI1) und zumindest einer zweiten Bildinformation (BI2-BI8) aus dem Bild (B) durch zeilenweises oder spaltenweises Auslesen,
f) Bilden eines Datenstroms durch Verketten der ersten und der zumindest einen zweiten Bildinformation (BI1, BI2-BI8),
g) Berechnen der Signalfrequenz aus dem Datenstrom und Identifizieren der zumindest einer Dateninformation (DI) aus der Signalfrequenz.

## Beschreibung

Die Erfindung betrifft ein Verfahren zur Datenübertragung in einem System, umfassend einen Sender mit einer Modulationsvorrichtung und einem Lichtemitter, sowie einen Empfänger mit einer Kamera, in welcher die Bilderfassung zeitlich sequenziell in Form von Bildzeilen oder Bildspalten erfolgt, und einer Rechenvorrichtung mit einem Speicher, wobei folgende Schritte ausgeführt werden:
a) Bereitstellen zumindest einer Dateninformation,
b) Modulieren eines Trägersignals mit einer Trägerfrequenz mithilfe der zumindest einen Dateninformation zu einem modulierten Signal durch die Modulationsvorrichtung,
c) Senden des modulierten Signals durch den Lichtemitter des Senders als Lichtsignal,
d) Empfangen des Lichtsignals durch die Kamera des Empfängers, welche ein Bild, umfassend Bildzeilen und Bildspalten, zeitlich sequenziell in Form von Bildzeilen oder Bildspalten erfasst, wobei eine Bildzeile oder eine Bildspalte mindestens doppelt so schnell erfasst wird, wie die Periodendauer des Trägersignals beträgt.

Die Erfindung betrifft außerdem ein System zur Datenübertragung, umfassend einen Sender mit einer Modulationsvorrichtung und einem Lichtemitter, sowie einen Empfänger mit einer Kamera, in welcher die Bilderfassung zeitlich sequenziell in Form von Bildzeilen oder Bildspalten erfolgt, und einer Rechenvorrichtung mit einem Speicher.

Automationskomponenten in elektrischen Anlagen werden immer leistungsfähiger und komplexer. Aus diesem Grund steigt auch der Bedarf an Überprüfung und Wartung. Während viele Geräte bereits eine Fernwartung und Diagnose unterstützen, sind einfachere Komponenten wie Netzteile typischerweise nicht in das Automationsnetzwerk integriert, spielen aber eine kritische Rolle in der Funktion des Gesamtsystems.

Um auch bei solchen Geräten eine digitale Wartung und Diagnose zu erlauben, benötigt es entsprechende Schnittstellen und Diagnosegeräte. Der Aufwand an Hardware und Software sowohl im Gerät selbst als auch für das Diagnosegerät ist enorm, insbesondere bei einer großen Anzahl an entsprechenden Geräten. Idealerweise sollte für eine solche Schnittstelle keine zusätzliche Hardware erforderlich sein. Auch hinsichtlich Diagnosegerät sollte keine spezielle Hardware (dedizierte Diagnose- bzw. Auslesegeräte) erforderlich sein.

Bei Komponenten, die über das Anlagennetzwerk verbunden sind, ist eine Diagnose grundsätzlich aus der Ferne möglich. Allerdings werden Diagnosen und Wartungen oftmals vor Ort durchgeführt. Will man nun die Diagnose eines Geräts durchführen muss dieses erst im Automationssystem gefunden werden. Dazu kommen Herausforderungen hinsichtlich Konnektivität im Feld, Identifikation des Geräts oder Zugriff auf das Gerät (Security) sowie Beschränkung des Zugriffs auf ein Gerät und Abschottung anderer Teilnehmer im Automationssystem bzw. Kommunikationsnetzwerk (sprich unbefugter Zugriff eines Servicetechnikers auf andere kritische Anlagenteile). Eine lokale Schnittstelle wäre hier also ebenfalls vorteilhaft, auch wenn das Gerät grundsätzlich in das Automationssystem integriert ist.

Bisher wurden Diagnosen in Automationskomponenten entweder über das Anlagennetzwerk und das Automationssystem durchgeführt oder bei einfacheren nicht verbundenen Geräten über lokale Schnittstellen.

Hierzu wurden oftmals einfache drahtgebundene Schnittstellen wie beispielsweise RS232 oder RS485 geschaffen und über einfache proprietäre Protokolle kommuniziert. Neben dem Zusatzaufwand an Hardware, die für die Schnittstelle notwendig ist (inkl. Konnektoren, Schutzart) ergeben sich hier auch noch weitere Herausforderungen hinsichtlich Rückwirkungsfreiheit, EMV und Konformität. Dazu kommt, dass bei dieser Art von Schnittstelle dedizierte Hardware zur Diagnose erforderlich ist (z.B. Handheld oder PC mit entsprechender Schnittstellenkarte) .

Alternativ dazu können drahtlose Schnittstellen wie Bluetooth, WiFi oder ähnliche proprietäre Funksysteme verwendet werden. Dazu ist allerdings eine wesentliche Erweiterung der Hardware erforderlich, was wieder mit entsprechenden Zusatzkosten verbunden ist (Hardware, EMV, Konformität, ...). Bei Verwendung von proprietären Systemen kommt hinzu, dass auch dedizierte Hardware zur Diagnose erforderlich ist (z.B. eigenes Diagnosegerät oder Schnittstelle für PC). Bei Funksystemen ergeben sich darüber hinaus weitere Herausforderungen hinsichtlich Zugriffsschutz, Sicherheit und Störanfälligkeit. In manchen Bereichen der Industrie ist auch die Emission von Radiowellen ein kritisches Thema.

Es ist Aufgabe der Erfindung eine digitale Schnittstelle für ein technisches Gerät zu schaffen, welches auf einfache Weise Daten vom Gerät zu einem Empfänger wie einem Mobilgerät kommuniziert, insbesondere hinsichtlich Zugriffsschutz, Sicherheit und Störanfälligkeit.

Die erfindungsgemäße Aufgabe wird durch ein Verfahren eingangs genannter Art gelöst, wobei folgende weitere Schritte ausgeführt werden:
e) Ermitteln einer ersten Bildinformation und zumindest einer zweiten Bildinformation aus dem Bild durch zeilenweises oder spaltenweises Auslesen, analog zur deren Erfassung im Schritt d), welche jeweils zumindest auf einem Anteil der jeweiligen Bildzeilen oder Bildspalten basieren, durch die Rechenvorrichtung,
f) Bilden eines Datenstroms durch Verketten der ersten und der zumindest einen zweiten Bildinformation durch die Rechenvorrichtung,
g) Berechnen der Signalfrequenz aus dem Datenstrom und Identifizieren der zumindest einer Dateninformation aus der Signalfrequenz durch die Rechenvorrichtung.

Dadurch wird auf einfach Weise erreicht, dass Daten mit einer hohen Datenrate vom Gerät zu einem Empfänger wie einem Mobilgerät kommuniziert werden können.

Es wird auch ein verbesserter Zugriffsschutz gewährleistet, da durch die optische Übertragung nur im unmittelbaren Umfeld die Daten empfangen werden können und nicht durch ein Eindringen in ein verbundenes IT-Netzwerk die Daten durch unautorisierte Personen gehackt werden können und somit die Daten-Sicherheit ungünstig beeinträchtigt werden kann.

Ferner ist die Lösung weniger störanfällig, da das System auf einem sehr einfachen und robusten Prinzip beruht.

Der technische Ansatz der Erfindung beruht auf der Anwendung der Eigenschaften eines elektronischen Verschlusses zusammen mit CMOS-Sensoren, wie er bei herkömmlichen Kameras mit elektronischen Bildsensoren, wie bei in Mobiltelefonen, Anwendung findet, insbesondere zur Erkennung einer Kommunikation im optisch sichtbaren Bereich.

Diese Eigenheiten äußern sich auch im üblicherweise unerwünschten "Rolling-Shutter"-Effekt bei einer Kamera eingangs genannter Art.

Der Rolling-Shutter-Effekt (etwa: "rollender Verschluss") ist ein Lagefehler, der bei Fotos oder Videoaufnahmen von bewegten Objekten auftreten kann.

Es erscheint zunächst selbstverständlich, dass die Belichtung aller Punkte des lichtempfindlichen Sensor-Elements einer Kamera zum exakt gleichen Zeitpunkt beginnt, so wie dies auch bei analoger Fotografie mit einem mechanischen Verschluss der Fall ist.

Es gibt aber Kameras, bei denen das bauartbedingt nicht für die gesamte Fläche zutrifft. Durch zeilenweises oder spaltenweises Auslesen, was zeitlich sequenziell erfolgt, kann sich das empfangene Lichtsignal während eines Auslesevorgangs einer Zeile beziehungsweise Spalte jedoch verändern.

Beim Zusammensetzen aller Zeilen zu einem gemeinsamen Bild würde sich daher das Bild gegenüber dem zwischenzeitlich veränderten Lichtsignal verändern, sodass das Lichtsignal nicht als Ganzes auf einmal abgebildet werden kann, sondern beispielsweise nur zeilenweise zu unterschiedlichen Zeitpunkten.

Die Erfindung nützt diesen Effekt, um die Aufnahmerate (engl. "framerate") zu verbessern und zu erhöhen, indem für jeden zeilen- oder spaltenweisen Auslesevorgang das Lichtsignal erfasst wird und dadurch eine wesentlich zeitlich höher abgetastete Sensordaten-Sequenz vorliegt als für ein gesamtes Bild.

Der Rolling-Shutter-Effekt tritt beispielsweise bei Kameras mit Digitalkameras mit Bildwandlern in CMOS-Sensor-Technik, da diese Sensoren das Bild zeilen- oder spaltenweise auslesen.

In einer Weiterbildung der Erfindung ist es vorgesehen, dass beim Ermitteln die erste und die zumindest einen zweite Bildinformation aus dem Bild durch Aggregation von Anteilen der Bildzeilen oder Bildspalten erhalten wird.

Dadurch kann die Störsicherheit weiter verbessert werden, sowie die optische Empfindlichkeit der Kamera verbessert werden.

In einer Weiterbildung der Erfindung ist es vorgesehen, dass die Berechnung der Signalfrequenz aus dem Datenstrom mithilfe einer Fast-Fourier-Transformation erfolgt.

Dadurch kann die Signalfrequenz auf eine zuverlässige Weise bestimmt werden und die Störungsempfindlichkeit gesteigert werden.

Außerdem können mehrere zeitlich sequenzielle Modulationszustände gleichzeitig erfasst werden, wenn das Auswertungsintervall dementsprechend lang gewählt ist, also sich über mehrere Bits in der zumindest einen Dateninformation erstreckt.

In einer Weiterbildung der Erfindung ist es vorgesehen, dass die Berechnung der Signalfrequenz aus dem Datenstrom mithilfe des Goertzel-Algorithmus erfolgt.

Der Goertzel-Algorithmus ist ein Verfahren aus der digitalen Signalverarbeitung und stellt eine besondere Form der diskreten Fourier-Transformation (DFT) dar. Im Gegensatz zu den verschiedenen schnellen Berechnungsmethoden bei der diskreten Fourier-Transformation (FFT), die immer alle diskreten Spektralkomponenten in einem Block berechnen, ist es mit dem Goertzel-Algorithmus möglich, nur einzelne diskrete Spektralanteile zu berechnen.

Der Algorithmus basiert auf einer Struktur bestehend aus einem digitalen Filter, das um eine Zustandssteuerung erweitert ist. Die Zustände unterteilen die Berechnung in den Rückwärtszweig, in dem die im Zeitbereich abgetasteten Eingangswerte geladen werden, und in einen Vorwärtszweig, der das Ausgangssignal liefert. Die Rückwärtsschleife wird bei jedem digitalen Abtastwert (engl. "sample") durchlaufen und ist als ein rekursives digitales Filter mit zwei Zustandsspeichern und einem Akkumulator aufgebaut. Der Vorwärtszweig wird erst nach N Abtastwerten einmalig durchlaufen und liefert aus den Zustandsspeichern den berechneten komplexen Ausgangswert - nämlich die spektrale Komponente nach Betrag und Phase.

Durch die Wahl der dabei eingesetzten Filterkoeffizienten lässt sich die Frequenzselektivität einstellen. Durch die Wahl der Anzahl der Abtastwerte lässt sich der Gütefaktor beeinflussen. N kann beliebige natürliche Werte annehmen.

Pro Spektralkomponente ist allerdings eine eigenständige Goertzel-Struktur notwendig. Daher ist dieser Algorithmus vor allem dann vorteilhaft und mit geringerem Rechenaufwand anwendbar, wenn nicht das komplette Spektrum berechnet werden soll, sondern nur einzelne Spektralkomponenten daraus.

Der Goertzel-Algorithmus ist besonders günstig und einfach zu implementieren. Außerdem ist die Berechnungsdauer kürzer, als in anderen im Stand der Technik bekannten Verfahren, insbesondere dann, wenn die zu erkennenden Zielfrequenzen bekannt sind, wie im vorliegenden Verfahren.

In einer Weiterbildung der Erfindung ist es vorgesehen, dass die Modulation des modulierten Signals eine Amplituden-, Frequenz- und/oder Phasen-Modulation ist, und die Modulationsfrequenz des modulierten Signals mindestens 50 Hz beträgt, bevorzugt mindestens 500 Hz, besonders bevorzugt mindestens 1000 Hz.

Dadurch kann die Übertragungsrate der Dateninformation gegenüber einer Auswertung des gesamten Kamera-Bildes erheblich verbessert werden.

In einer Weiterbildung der Erfindung ist es vorgesehen, dass die Modulation des modulierten Signals eine Frequenzmodulation ist und modulierten Frequenzen für einzelne Modulationszustände der Modulation zueinander nicht harmonisch gelegen sind.

Dadurch wird die Berechnung der Signalfrequenz erleichtert, da Mehrdeutigkeiten vermieden werden, welche die Auswertung ungünstig beeinflussen können.

In einer Weiterbildung der Erfindung ist es vorgesehen, dass die Modulation des modulierten Signals ein Tastverhältnis von mindestens 50% aufweist, bevorzugt mindestens 75%.

Dadurch kann eine hohe Lichtintensität für den Lichtemitter erreicht werden, was die Reichweite zwischen Sender und Empfänger sowie die Störanfälligkeit verbessert und zugleich eine Signalfunktion des Emitters, wie beispielsweise eine Betriebszustandsanzeige nicht beeinträchtigt.

In einer Weiterbildung der Erfindung ist es vorgesehen, dass die Modulation des modulierten Signals ein konstantes Tastverhältnis über einzelne Modulationszustände aufweist.

Dadurch kann für den Lichtemitter erreicht werden, dass das emittierte Licht für einen Beobachter nicht flackert, was eine Information hinsichtlich der Zuverlässigkeit für das technische Gerät verbessert und für Beobachter ein Vertrauen in das Gerät nicht beeinträchtig.

Insbesondere, wenn der Lichtemitter gleichzeitig für eine Betriebsanzeige des Betriebszustands des technischen Geräts dient, wäre ein Flackern absolut unerwünscht, da Beobachter dies fälschlicherweise als Fehler des technischen Geräts deuten könnten

In einer Weiterbildung der Erfindung ist es vorgesehen, dass die Trägerfrequenz konstant ist.

Dadurch kann wird erreicht, dass die Berechnung der Signalfrequenz aus dem Datenstrom auf eine einfache Weise erfolgen kann und die Robustheit des Systems gesteigert werden kann.

In einer Weiterbildung der Erfindung ist es vorgesehen, dass die zumindest eine Dateninformation eine gerätespezifische Information, eine Autorisierungsinformation oder eine Authentifizierungsinformation umfasst.

Dadurch kann erreicht werden, dass beispielsweise eine gerätespezifische Information, Zugriffsinformation, Autorisierungsinformation oder Authentifizierungsinformation vom Gerät über die optische Schnittstelle zum Empfänger, beispielsweise in einem Smartphone gesendet wird.

Es wird eine hohe Abhörsicherheit erzielt, da ein optischer Signalempfang nur lokal möglich ist.

Die erfindungsgemäße Aufgabe wird auch durch ein System eingangs genannter Art gelöst, wobei die erfindungsgemäßen Verfahrensschritte ausgeführt werden.

In einer Weiterbildung der Erfindung ist es vorgesehen, dass der Sender von einem technischen Gerät mit einem optischen Betriebszustands-Indikator umfasst ist, und der Lichtemitter durch den Betriebszustands-Indikator gebildet ist, sowie der Empfänger von einem Mobilgerät, insbesondere einem Smartphone oder einem Tablet-Computer, umfasst ist.

Dadurch kann eine einfache und kostengünstige Realisierung des erfindungsgemäßen Systems erfolgen.

Der Betriebszustands-Indikator kann beispielsweise eine Leuchtdiode oder Elemente eines digitalen Displays sein.

In einer Weiterbildung der Erfindung ist es vorgesehen, dass die die zumindest eine Dateninformation eine gerätespezifische Information, eine Autorisierungsinformation oder eine Authentifizierungsinformation des technischen Geräts umfasst, welche zur Datenübertragung in dem System vorgesehen ist.

Eine gerätespezifische Information, eine Autorisierungsinformation oder eine Authentifizierungsinformation kann in Form einer Dateninformation bereitgestellt, vom Sender gesendet und vom Empfänger empfangen werden.

Die Erfindung wird nachfolgend anhand eines in den beigeschlossenen Zeichnungen dargestellten Ausführungsbeispiels näher erläutert. In den Zeichnungen zeigt:
- Fig. 1: ein Blockschaltbild für ein Ausführungsbeispiel der Erfindung,
- Fig. 2: ein Flussdiagramm des erfindungsgemäßen Verfahrens,
- Fig. 3: Ein Beispiel für ein moduliertes Lichtsignal,
- Fig. 4: Ein Beispiel für ein, mit einem Kamerasensor empfangenen Lichtsignal nach der Fig. 3,
- Fig. 5: Ein Beispiel für ein spaltenweise ausgelesenes Signal von Anteilen des Bildes nach Fig. 4,
- Fig. 6: Ein Beispiel für ein aggregiertes Signal der Fig. 5,
- Fig. 7: Ein Beispiel für einen Datenstrom, welcher aus dem aggregierten Signal nach der Fig. 6 gebildet wurde.

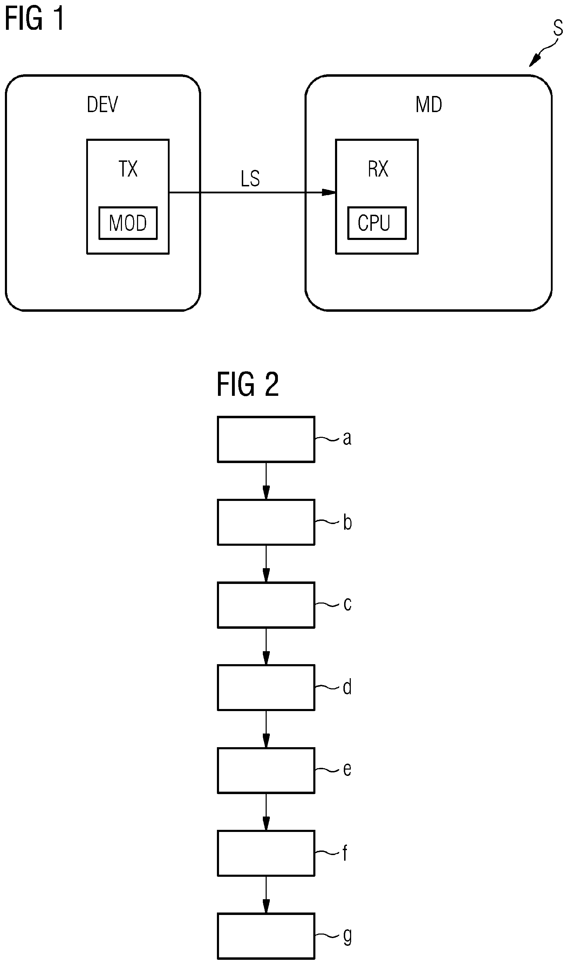

**Fig. 1** stellt ein Blockschaltbild für ein Ausführungsbeispiel der Erfindung dar.

Ein System S zur Datenübertragung umfasst ein technisches Gerät DEV, welches einen Sender TX mit einer Modulationsvorrichtung MOD und einen Lichtemitter aufweist.

Der Lichtemitter kann ein Betriebszustands-Indikator des Geräts DEV sein und beispielsweise eine Leuchtdiode oder Elemente eines digitalen Displays des Geräts DEV sein.

Ferner umfasst das System S ein Mobilfunkgerät MD, ein Smartphone, mit einen Empfänger RX mit einer Kamera sowie einer Rechenvorrichtung CPU mit einem Speicher.

Die Rechenvorrichtung kann beispielsweise ein Mikroprozessor oder ein digitaler Signalprozessor, eine programmierbare Logik oder ähnliches sein.

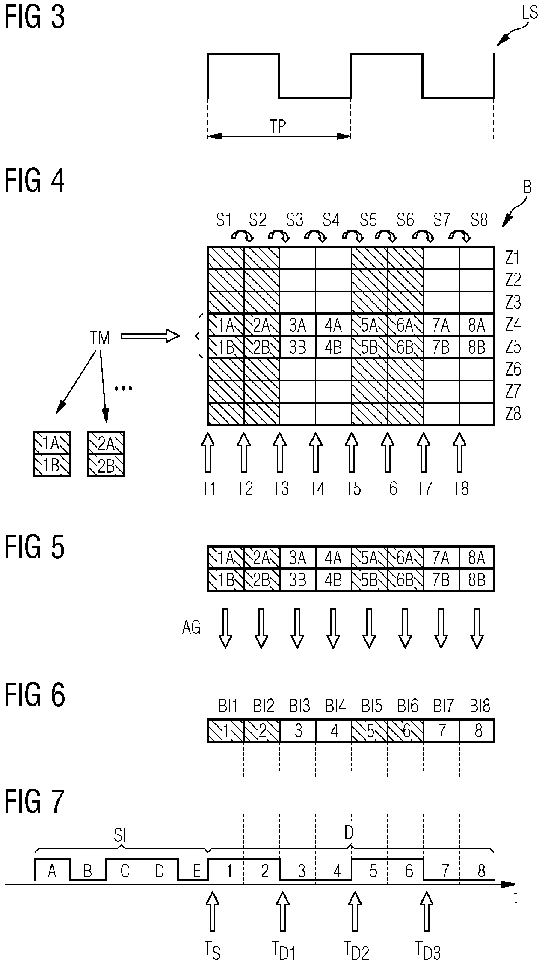

In der Kamera erfolgt die Bilderfassung zeitlich sequenziell in Form von Bildzeilen Z1-Z8 oder alternativ in Form von Bildspalten S1-S8, wie in Fig. 4 näher ausgeführt.

Ein Lichtsignal LS liegt im optisch sichtbaren Bereich und wird vom Emitter zum Kamera-Sensor übertragen.

Die Erfindung basiert auf einer grundsätzlich eher nachteiligen Eigenschaft der Kamera und nützt die Eigenschaft eines "elektronischen Verschlusses" aus, welcher zu einem "Rolling Shutter"-Effekt führt.

Beim elektronischen Verschluss erfolgt bei der Bilderfassung die Belichtung eines vollständigen Bildes nicht exakt zur selben Zeit.

Die Belichtung und das Auslesen der Bildinformation erfolgen zeilenweise oder spaltenweise mit relativ hoher Geschwindigkeit.

Dadurch können Signale durch einen genügend großen Lichtemitter übertragen werden, das heißt der Bildausschnitt mit dem Lichtemitter erstreckt sich über mehrere Zeilen oder Spalten. Entscheidend dabei ist die Zeilenfrequenz beziehungsweise und die Belichtungsdauer einer Zeile beziehungsweise. Spalte.

**Fig. 2** zeigt ein Flussdiagramm des erfindungsgemäßen Verfahrens, wobei folgende Schritte ausgeführt werden:
a) Bereitstellen zumindest einer Dateninformation,
b) Modulieren eines Trägersignals mit einer Trägerfrequenz mithilfe der zumindest einen Dateninformation zu einem modulierten Signal durch die Modulationsvorrichtung MOD,
c) Senden des modulierten Signals durch den Lichtemitter des Senders TX als Lichtsignal LS,
d) Empfangen des Lichtsignals LS durch die Kamera des Empfängers RX, welche ein Bild B, umfassend Bildzeilen Z1-Z8 und Bildspalten S1-S8, zeitlich sequenziell in Form von Bildzeilen Z1-Z8 oder Bildspalten S1-S8 erfasst, wobei eine Bildzeile Z1-Z8 oder eine Bildspalte S1-S8 mindestens doppelt so schnell erfasst wird, wie die Periodendauer TP des Trägersignals beträgt,
e) Ermitteln einer ersten Bildinformation BI1 und zumindest einer zweiten Bildinformation BI2-BI8 aus dem Bild B durch zeilenweises oder spaltenweises Auslesen, analog zur deren Erfassung im Schritt d), welche jeweils zumindest auf einem Anteil TM der jeweiligen Bildzeilen Z1-Z8 oder Bildspalten S1-S8 basieren, durch die Rechenvorrichtung CPU,
f) Bilden eines Datenstroms durch Verketten der ersten und der zumindest einen zweiten Bildinformation BI1, BI2-BI8 durch die Rechenvorrichtung CPU,
g) Berechnen der Signalfrequenz aus dem Datenstrom und Identifizieren der zumindest einer Dateninformation DI aus der Signalfrequenz durch die Rechenvorrichtung CPU.

Die Modulation des modulierten Signals kann eine Amplituden-, Frequenz- und/oder Phasen-Modulation sein.

Die Modulationsfrequenz des modulierten Signals beträgt für eine hohe Datenübertragungsrate mindestens 50 Hz oder mehr, bevorzugt mindestens 500 Hz, besonders bevorzugt mindestens 1000 Hz.

Ist die Modulation des modulierten Signals eine Frequenzmodulation, so sollten die modulierten Frequenzen für einzelne Modulationszustände der Modulation zueinander nicht harmonisch gelegen sein.

Beispielsweise kann eine Frequenz im modulierten Signal zur Übertragung eines logische "0"-Zustands bei 500 Hz liegen und eine Frequenz im modulierten Signal zur Übertragung eines logische "1"-Zustands bei 700 Hz liegen.

Es sind auch mehrwertige Modulationen möglich, also können beispielsweise zur Übertragung von dreiwertigen Informationen drei verschiedene Frequenzen gewählt werden, wie 1000 Hz, 1100 Hz und 1200 Hz.

Die Modulation des modulierten Signals weist ein Tastverhältnis von mindestens 50% auf, um eine hohe Helligkeit der Leuchtdiode zu erhalten.

Mit einem höheren Tastverhältnis wird die Helligkeit der LED nur geringst beeinträchtigt und ist für Benutzer des Geräts DEV nicht oder kaum wahrnehmbar.

Die Modulation des modulierten Signals weist überdies ein konstantes Tastverhältnis über einzelne Modulationszustände auf, um zu verhindern, dass Benutzer des Geräts DEV ein unerwünschtes Flackern wahrnehmen.

Zur einfachen Auswertung des Datenstroms ist die Trägerfrequenz konstant.

**Fig. 3** zeigt ein Beispiel für ein moduliertes Lichtsignal mit einer Periodendauer TP.

**Fig. 4** zeigt in Beispiel für ein mit dem Kamerasensor empfangenen Lichtsignal LS nach der vorhergehenden Figur.

Die Kamera des Empfängers RX erfasst ein Bild B zeitlich sequenziell in Form von Bildspalten S1-S8.

Das Bild weist Bildzeilen Z1-Z8 und Bildspalten S1-S8 auf.

Dabei wird eine Bildspalte S1-S8 mindestens doppelt so schnell erfasst, wie die Periodendauer TP des Trägersignals beträgt.

Es wird für jede Spalte S1- S8 jeweils eine Teilmenge TM über mehrere Zeilen Z4, Z5 gebildet.

**Fig. 5** stellt ein Beispiel für ein spaltenweise ausgelesenes Signal von Anteilen des Bildes nach Fig. 4 dar.

Es erfolgt ein Ermitteln einer ersten Bildinformation BI1 und weiteres Bildinformationen BI2-BI8 aus dem Bild B durch spaltenweises Auslesen der Kamera.

**Fig. 6** zeigt ein Beispiel für ein aggregiertes Signal der Fig. 5.

Beim Ermitteln können optional die erste und die zweiten Bildinformationen BI1, BI2-BI8 aus dem Bild B durch Aggregation AG von Anteilen TM der Bildzeilen Z1-Z8 erhalten werden, um die Signalqualität zu verbessern.

Alternativ kann auch nur eine Zeile aus dem Bild B weiterverarbeitet werden.

Anschließens wird ein Datenstrom durch Verketten der ersten und zweiten Bildinformationen BI1, BI2-BI8 durch die Rechenvorrichtung CPU gebildet.

**Fig. 7** zeigt ein Beispiel für einen Datenstrom, welcher aus dem aggregierten Signal nach der Fig. 6 gebildet wurde.

Die Berechnung der Signalfrequenz kann aus dem Datenstrom mithilfe einer Fast-Fourier-Transformation erfolgen.

Dadurch kann beispielsweise eine Verbesserung der Signalqualität des Lichtsignals LS erzielt werden.

Beispielsweise kann ein Umgebungslicht, wie sie durch eine LED-Beleuchtung erzeugt wird, auf einfache Weise herausgefiltert werden.

Beleuchtungstechnologie verwendet typischerweise sehr ähnliche Frequenzen im Bereich von 600-1000Hz.

Wendet man also auf den Ausschnitt eines Frames eine FFT oder ein vergleichbares Verfahren zur Extraktion und Erkennung unterschiedlicher Frequenzen an, so kann jeweils die Grundfrequenz und somit das entsprechende Signal im Frequenzbereich eindeutig identifiziert werden.

Abhängig von der Größe der LED, der Distanz zwischen Smartphone und Gerät, und damit der relativen Größe der LED im Bild, sowie der Zeilenfrequenz ergeben sich bei der Auswertung der FFT für die für die Übertragung verwendeten unterschiedlichen Frequenzen auch deutlich unterschiedliche Werte.

Die Unterschiedlichen Parameter mit Einfluss auf die "gemessene" Frequenz, wie Smartphone Technologie, Größe der LED, etc., sind bei der Erkennung unerheblich, da lediglich die relativen Frequenzsprünge zwischen den Bits im Datenstrom für die Decodierung relevant sind.

Trotz unterschiedlichster Smartphone-Technologien ist die Framerate und somit auch die Zeilenfrequenz im normalen Videomodus vergleichbar und für die Erkennung ausreichend.

SlowMotion-Modes, die in vielen Smartphones unterschiedlich realisiert werden, werden nicht benötigt. Grundsätzlich kann die FFT spaltenweise über das Bild berechnet werden, sodass darin jeweils eine zeitlich und räumlich versetzte Serie von Bildpunkten enthalten ist.

Werte einzelner oder ausgewählter FFTs können aufsummiert werden, was in einem einzelnen diskreten Spektrum resultiert und die Dekodierung erleichtert.

Alternativ können zur Frequenzmessung auch Zeitpunkte TD1, TD2, TD3 für Signaländerungen im Datenstrom bestimmt werden.

Dazu kann zunächst ein Startzeitpunkt TS bestimmt werden, indem zusätzlich zur Dateninformation DI dem Sender eine Startsequenz SI bereitgestellt wird, diese übertragen wird und mit dem Empfänger empfangen wird. Wird die Startsequenz SI erkannt, so wird damit signalisiert, dass eine Datensequenz nachfolgt.

Aus den Zeitpunkten TD1, TD2, TD3 kann die Signalfrequenz einfach berechnet werden.

Ein Bit-Intervall im Datenstrom erstreckt sich über mehrere Frames der Videoaufnahme hinweg, da die Dekodierung asynchron zur Codierung erfolgt.

Es ist vorteilhaft, wenn bei Verwendung einer einfachen UART Übertragung mit Startbit, 8 Datenbits, einem Paritybit und eine Framerate von beispielsweise 60fps (16,6 ms pro Frame) das Bit-Intervall >50ms lang sein, sodass sichergestellt ist, dass zumindest zwei Frames das Bit vollständig und korrekt dekodiert und so ein Majority-Voting zur Dekodierung verwendet werden kann. Hierbei ist allerdings eine konstante Bitrate zwischen Sender und Empfänger vorab zu vereinbaren.

### Bezugszeichenliste:

- 1-8: Daten-Sequenz, aggregierter Bildzeilen-Anteil über Spalten
- 1A-8A, 1B-8B: Bildzeilen-Anteil über Spalten
- A-E: Start-Sequenz
- AG: Aggregation von Bildzeilen-Anteil über Spalten
- B: Bild
- BI1-BI8: Bildinformationen
- CPU: Rechenvorrichtung
- DEV: Gerät
- DI: Daten-Informationen
- LS: Lichtsignal, sichtbares Licht
- MD: Mobiles Gerät
- MOD: Modulationsvorrichtung
- RX: Empfänger mit Kamera
- S: System
- S1-S8: Bildspalten
- SI: Start-Informationen
- t: Zeitachse
- T1-T8: Abtastzeitpunkte, Auslesezeitpunkte aus Kamera
- TD1-TD3: Zeitpunkt für Änderung der Daten-Information
- TM: Teilmenge
- TP: Periodendauer des Lichtsignals
- TS: Startzeitpunkt
- TX: Sender mit Lichtemitter

## Patentansprüche

1. Verfahren zur Datenübertragung in einem System (S), umfassend einen Sender (TX) mit einer Modulationsvorrichtung (MOD) und einem Lichtemitter, sowie und einen Empfänger (RX) mit einer Kamera, in welcher die Bilderfassung zeitlich sequenziell in Form von Bildzeilen oder Bildspalten erfolgt, und einer Rechenvorrichtung (CPU) mit einem Speicher, wobei folgende Schritte ausgeführt werden:
a) Bereitstellen zumindest einer Dateninformation,
b) Modulieren eines Trägersignals mit einer Trägerfrequenz mithilfe der zumindest einen Dateninformation zu einem modulierten Signal durch die Modulationsvorrichtung (MOD),
c) Senden des modulierten Signals durch den Lichtemitter des Senders (TX) als Lichtsignal (LS),
d) Empfangen des Lichtsignals (LS) durch die Kamera des Empfängers (RX), welche ein Bild (B), umfassend Bildzeilen (Z1-Z8) und Bildspalten (S1-S8), zeitlich sequenziell in Form von Bildzeilen (Z1-Z8) oder Bildspalten (S1-S8) erfasst, wobei eine Bildzeile (Z1-Z8) oder eine Bildspalte (S1-S8) mindestens doppelt so schnell erfasst wird, wie die Periodendauer (TP) des Trägersignals beträgt,
**gekennzeichnet durch** folgende weitere Schritte:
e) Ermitteln einer ersten Bildinformation (BI1) und zumindest einer zweiten Bildinformation (BI2-BI8) aus dem Bild (B) durch zeilenweises oder spaltenweises Auslesen, analog zur deren Erfassung im Schritt d), welche jeweils zumindest auf einem Anteil (TM) der jeweiligen Bildzeilen (Z1-Z8) oder Bildspalten (S1-S8) basieren, durch die Rechenvorrichtung (CPU),
f) Bilden eines Datenstroms durch Verketten der ersten und der zumindest einen zweiten Bildinformation (BI1, BI2-BI8) durch die Rechenvorrichtung (CPU),
g) Berechnen der Signalfrequenz aus dem Datenstrom und Identifizieren der zumindest einer Dateninformation (DI) aus der Signalfrequenz durch die Rechenvorrichtung (CPU).

2. Verfahren nach dem vorhergehenden Anspruch, wobei beim Ermitteln die erste und die zumindest einen zweite Bildinformation (BI1, BI2-BI8) aus dem Bild (B) durch Aggregation (AG) von Anteilen (TM) der Bildzeilen (Z1-Z8) oder Bildspalten (S1-S8) erhalten wird.

3. Verfahren nach einem der vorhergehenden Ansprüche, wobei die Berechnung der Signalfrequenz aus dem Datenstrom mithilfe einer Fast-Fourier-Transformation erfolgt.

4. Verfahren nach einem der Ansprüche 1 bis 3, wobei die Berechnung der Signalfrequenz aus dem Datenstrom mithilfe des Goertzel-Algorithmus erfolgt.

5. Verfahren nach einem der vorhergehenden Ansprüche, wobei die Modulation des modulierten Signals eine Amplituden-, Frequenz- und/oder Phasen-Modulation ist, und die Modulationsfrequenz des modulierten Signals mindestens 50 Hz beträgt, bevorzugt mindestens 500 Hz, besonders bevorzugt mindestens 1000 Hz.

6. Verfahren nach einem der vorhergehenden Ansprüche, wobei die Modulation des modulierten Signals eine Frequenzmodulation ist und modulierten Frequenzen für einzelne Modulationszustände der Modulation zueinander nicht harmonisch gelegen sind.

7. Verfahren nach einem der vorhergehenden Ansprüche, wobei die Modulation des modulierten Signals ein Tastverhältnis von mindestens 50% aufweist, bevorzugt mindestens 75%.

8. Verfahren nach einem der vorhergehenden Ansprüche, wobei die Modulation des modulierten Signals ein konstantes Tastverhältnis über einzelne Modulationszustände aufweist.

9. Verfahren nach einem der vorhergehenden Ansprüche, wobei die Trägerfrequenz konstant ist.

10. Verfahren nach einem der vorhergehenden Ansprüche, wobei die zumindest eine Dateninformation (DI) eine gerätespezifische Information, eine Autorisierungsinformation oder eine Authentifizierungsinformation umfasst.

11. System (S) zur Datenübertragung, umfassend einen Sender (TX) mit einer Modulationsvorrichtung (MOD) und einem Lichtemitter, sowie einen Empfänger (RX) mit einer Kamera, in welcher die Bilderfassung zeitlich sequenziell in Form von Bildzeilen oder Bildspalten erfolgt, und einer Rechenvorrichtung (CPU) mit einem Speicher, wobei die Verfahrensschritte nach einem der vorhergehenden Ansprüche ausgeführt werden.

12. System (S) nach dem vorhergehenden Anspruch, wobei der Sender von einem technischen Gerät mit einem optischen Betriebszustands-Indikator umfasst ist, und der Lichtemitter durch den Betriebszustands-Indikator gebildet ist, sowie der Empfänger (RX) von einem Mobilgerät (MP), insbesondere einem Smartphone oder einem Tablet-Computer, umfasst ist.

13. System (S) nach dem vorhergehenden Anspruch, wobei die die zumindest eine Dateninformation (DI) eine gerätespezifische Information, eine Autorisierungsinformation oder eine Authentifizierungsinformation des technischen Geräts umfasst, welche zur Datenübertragung in dem System (S) vorgesehen ist.
